(19) Europäisches Patentamt

European Patent Office

Office européen des brevets

(11) EP 0 892 101 B1

(12) EUROPEAN PATENT SPECIFICATION

(45) Date of publication and mention
of the grant of the patent:
**26.11.2003 Bulletin 2003/48**

(51) Int Cl.⁷: **D04H 1/42**, D04H 1/54,
D04H 1/60, D04H 13/00,
C04B 14/38, A47C 27/12,
B32B 5/02

(21) Application number: **96942577.6**

(22) Date of filing: **19.12.1996**

(86) International application number:
**PCT/JP96/03705**

(87) International publication number:
**WO 97/037070 (09.10.1997 Gazette 1997/43)**

(54) **THREE-DIMENSIONAL STRUCTURE OF CARBON FIBER**

DREIDIMENSIONALE STRUKTUR AUS KOHLENSTOFFASERN

STRUCTURE TRIDIMENSIONNELLE DE FIBRE DE CARBONE

(84) Designated Contracting States:
**DE FR GB**

(30) Priority: **31.03.1996 JP 10190696**

(43) Date of publication of application:
**20.01.1999 Bulletin 1999/03**

(73) Proprietor: **OSAKA GAS CO., LTD.**
**Osaka-shi, Osaka 541-0046 (JP)**

(72) Inventor: **MORITA, Hiroaki Osaka Gas Co., Ltd.**
**Osaka 541-0046 (JP)**

(74) Representative: **Barnfather, Karl Jon, Dr. et al**
**Withers & Rogers,**
**Goldings House,**
**2 Hays Lane**
**London SE1 2HW (GB)**

(56) References cited:
**JP-A- 1 239 147**        **JP-A- 3 027 121**
**JP-A- 7 331 572**        **JP-A- 61 225 360**

**Description**

## TECHNICAL FIELD

The present invention relates to a three dimensional structure formed of carbon fibers and, more particularly, to a three dimensional carbon fiber structure which can advantageously be used as a principal material for cushioning materials, sleeping pad materials and the like.

## BACKGROUND ART

Carbon fibers are light-weight and tough, and excellent in heat resistance and chemical stability. In recent years, the carbon fibers having such excellent properties have found wide applications in various fields which entail requirements for light-weight and durability. For example, the carbon fibers are used for structural materials for fishing rods and rackets as an alternative to natural materials such as bamboo and wood, and for structural materials for automobiles and aircraft as an alternative to metallic materials such as iron and steel. Further, the carbon fibers are used as reinforcements for plastic materials and concrete materials.

Japanese Unexamined Patent Publications No. 3-17946 (1991) and No. 3-13349 (1991) propose sound- and heat-insulating materials comprising a graphite carbon fiber aggregate.

*JP 61-225360 A describes a method of forming a fibre sheet for use in filters, electrodes etc. where carbonaceous fibres are graphitised and/or ground, moulded into a sheet and then bound by melting or with the aid of a binder.*

*WO 8606110 describes a method of forming a fibre with spring-like reversible deflection produced by shaping and heating in relaxed state a stabilised carbonised fibre material to impart temporary or permanent setting.*

However, conventional application fields of the carbon fibers are limited to those which utilize the toughness of the carbon fibers per se. Even the aforesaid carbon fiber aggregate for the sound- and heat-insulating materials has a high bulk density and a poor compression resilience. Therefore, the carbon fibers cannot be used in application fields where soft materials such as cotton, wool and polyester fibers have been used.

A reason why the carbon fibers are not used in application fields such as of cushioning materials (resilient materials) and sleeping pad materials which typically employ soft materials is that the carbon fibers fail to ensure soft and comfortable seating or bedding and a simple carbon fiber aggregate suffers deterioration in compression resilience in a short term.

Cushioning materials (resilient materials) sleeping pad materials formed of conventional fibers materials. heat resistance.

It is an object of the present invention to provide a novel material (three dimensional carbon fiber structure) which utilizes excellent properties, e.g., resilience and wear resistance, of carbon fibers to ensure moderate flexibility, compression resilience, compression durability and the like which cannot be afforded by a simple aggregate of carbon fibers, and can advantageously be used in applications closely associated with human sensibilities.

## DISCLOSURE OF THE INVENTION

The inventors of the present invention have made intensive studies on a carbon fiber material which ensure full utilization of toughness, abrasion and wear resistance and chemical stability of carbon fibers to impart a moderate compression resilience to the carbon fiber material. As a result, the inventors have found that a three dimensional carbon fiber structure having an excellent durability, abrasive resistance and chemical stability and a moderate and comfortable compression resilience property can be obtained by properly binding an aggregate of carbon fibers including crimped fibers with a binder. Thus, the inventors have attained the present invention to be hereinafter described. The invention has the following features.

(1) A three dimensional carbon fiber structure according to claim 1.

It is preferred that the three dimensional carbon fiber structure according to the present invention further has the following features.

The three dimensional carbon fiber structure has a bulk density of 24 to 40 $Kg/m^3$, and a compression hardness LC of 0.7 to 0.8 with application of the maximum load of 100 $gf/cm^2$, a compression recovery rate RC of not less than 65%, a ratio of 65% compression stress to 25% compression stress of not less than 10, and a residual strain rate of less than 5% after 80,000-time compression.

The binder contains not less than 50 wt% of the thermosetting resin, and is contained in an amount of 10 to 40 wt% relative to the total amount of the fibers.

The crimped fibers each have a length of 0.1 to 10 cm.

The crimped fibers comprise carbon fibers.

The carbon fibers comprise pitch-based carbon fibers.

The property values of the aforesaid structure are herein defined as follows. The compression hardness LC is determined by dividing the value of an energy required for compressing the structure from an initial thickness with application of no load to a thickness with application of the maximum load of 100 gf/cm$^2$ by the value of a work energy required when the relationship of the load versus the strain becomes linear. The compression recovery rate RC is determined by dividing the value of an energy required for bringing the structure to an unloaded state from a loaded state by the value of the energy required for compressing the structure with application of the maximum load of 100 gf/cm$^2$ and multiplying the quotient by 100. The compression stress ratio is determined by dividing the value of a stress generated when the structure is compressed by 65% by the value of a stress generated when the structure is compressed by 25%. The residual strain rate after 80,000-time compression is calculated from the following expression:

$$(\text{thickness change} / \text{initial thickness}) \times 100$$

wherein the thickness change is determined by repeating a cycle of compressing the structure by 50% of the initial thickness and restoring the structure to the initial thickness 80,000 times. These property values are each determined with the use of a 125 mm x 125 mm square sample of the structure.

The aforesaid three dimensional carbon fiber structure is formed by firmly bonding the carbon fibers (which may include non-carbon fibers) to each other at contacts thereof with the binder to form a three dimensional network. Therefore, when an external pressure is applied to the structure, the pressure is diffused throughout the three dimensional network structure and absorbed by the structure, and flexural elastic forces (resilient forces) of the respective fibers are integrated through the three dimensional network to provide a predetermined compression resilience (as defined by the aforesaid predetermined property values) as a whole. As will be described later, the structure having such property values exhibits a soft and comfortable compression resilience property which cannot be afforded by a simple aggregate of carbon fibers.

In accordance with the present invention, a novel material is provided which has a soft and comfortable compression resilience property. The three dimensional carbon fiber structure is advantageously used in application fields which require a moderate compression resilience property, for example, for sleeping pads and cushioning materials for chairs and beds. In addition, the three dimensional carbon fiber structure is superior in sound absorption and heat insulation and, therefore, can be used in the application fields of sound and heat insulators.

The crimped fibers may be carbon fibers and/or non-carbon fibers. The crimped carbon fibers may be used in combination with the crimped non-carbon fibers, but preferably used alone. The non-carbon fibers are generally inferior in heat resistance and chemical stability to the carbon fibers.

For formation of the three dimensional network structure, the crimped fibers are contained in an amount of not less than 50 wt% relative to the total amount of the fibers. The crimped fibers are preferably used in a greater amount for formation of a structure having a higher bulk density and a greater compression resilience. If the amount of the crimped fibers is less than 50 wt%, a desired three dimensional network structure cannot be formed, so that the resulting structure has an insufficient compression resilience.

The crimped fibers preferably each have a length of 0.1 to 10 cm. If the length of the crimped fibers is less than 0.1 cm, portions of the crimped fibers to be entangled for the network formation are extremely short. Accordingly, the bulk density of the resulting structure is too small to provide a satisfactory compression resilience. Conversely, if the length is greater than 10 cm, the portions of the crimped fibers to be entangled for the network formation are extremely long, so that the number of fiber contacts is reduced. It is therefore impossible to form a three dimensional network structure having a satisfactory compression resilience. The crimp rate and crimp number of the crimped fibers are not particularly limited, but preferably 10% or greater and 1 crimp/cm or greater, respectively, on average.

The carbon fibers are preferably contained in the structure in an amount of at least 50 wt% or greater relative to the total amount of the fibers constituting the structure. If the amount of the carbon fibers is 50 wt% or greater, the flexural resilience property of the carbon fibers generally governs the compression property of the structure, and the advantageous properties, such as fire resistance and chemical stability, of the carbon fibers are dominant in the structure. As the proportion of the carbon fibers in the structure becomes greater, the three dimensional structure exhibits the advantageous properties intrinsic to the carbon fibers to a greater extent. Therefore, the amount of the carbon fibers is preferably as great as possible.

In the present invention, any of various kinds of carbon fibers can be used, and the kind of the carbon fibers is not particularly limited. Examples of usable carbon fibers include those obtained by carbonizing or graphitizing polymers such as polyacrylonitrile, phenol resin and rayon, and pitches such as petroleum pitch and coal pitch. Among these carbon fibers, general-purpose pitch-based carbon fibers are preferred in consideration of the toxicity of a gas possibly emitting during forced heating of a carbon material, the processibility and the costs.

Usable as the binder are a thermosetting resin and thermally bondable fibers. These may be used either alone or in combination. More specifically, it is preferred that the thermosetting resin is contained in the binder in a proportion of 50 wt% or greater, and the binder is used in an amount of 10 to 40 wt% relative to the total amount of the fibers. For formation of a firmer network structure, the thermosetting resin is more preferably used in an amount of 5 to 20 wt% relative to the total amount of the fibers. If the amount of the thermosetting resin is less than 5 wt% relative to the total amount of the fibers, the number of unbound fiber contacts is increased, so that a loose network structure having a poor compression resilience is formed. Therefore, the amount of the thermosetting resin to be used is properly controlled within the aforesaid range depending on the application of the three dimensional structure.

Examples of the thermosetting resin to be used in the present invention include phenol resin, epoxy resin, vinyl ester resin, unsaturated polyester resin, thermosetting acrylic resin, polyurethane resin and polyimide, among which phenol resin, vinyl ester resin and polyurethane resin are preferable in terms of heat resistance and incombustibility, and phenyl resin is more preferable because a gas possibly emitting during forced heating is less toxic.

Usable as the thermally bondable fibers are polyester fibers and nylon fibers, among which polyester fibers are preferred in terms of the costs.

The thermally bondable fibers as the binder are typically blended in the aggregate of the other fibers including the carbon fibers. The thermally bondable fibers are preferably uniformly mixed with the other fibers. As the number of contacts between the thermally bondable fibers and the other fibers (or the entangling degree) is increased, a more excellent three dimensional fiber network structure can be formed by fusing of the thermally bondable fibers.

The thermosetting resin is added to the fiber aggregate by spraying thereon a solution containing the thermosetting resin dissolved in water or a solvent such as an alcohol. The spraying of the thermosetting resin solution is advantageous because the thermosetting resin can uniformly be spread over the fleecy fiber sheet and the thermosetting resin solution congregates around the fiber contacts by surface tension to efficiently and firmly bond the fiber contacts. Thus, a firm three dimensional network structure can be formed. When an external pressure is applied to the three dimensional carbon fiber network structure, the pressure is diffused throughout the three dimensional network structure and absorbed by the structure, and flexural elastic forces (resilient forces) of the respective fibers are integrated through the three dimensional network to provide a moderate compression resilience as a whole. Therefore, the structure has a comfortable compression property and which cannot be afforded by a simple aggregate of carbon fibers.

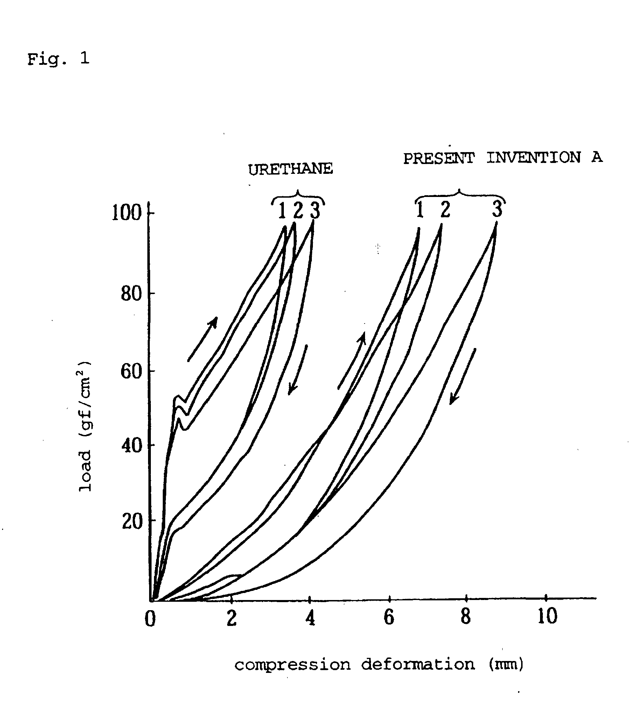

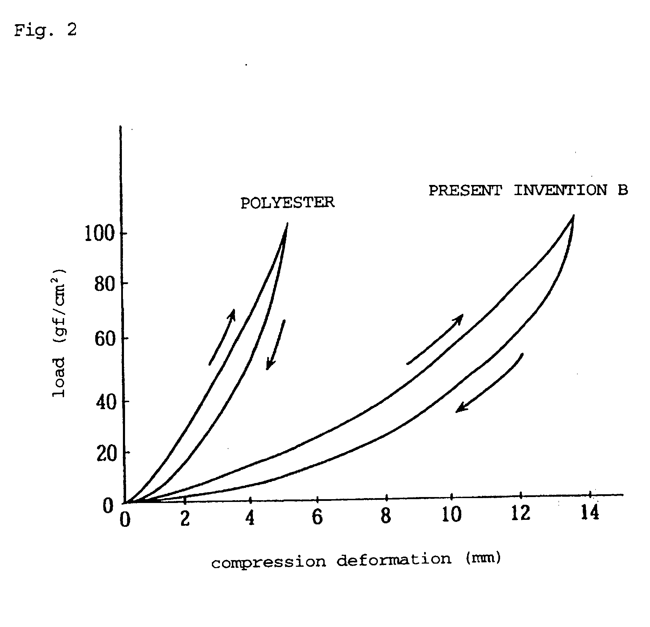

With reference to Figs. 1 and 2 and Table 1, the soft and comfortable compression property of the structure of the present invention will be described in detail.

Figs. 1 and 2 are graphs showing relationships (hysteresis characteristics) between the compression load and the compression deformation of the three dimensional carbon fiber structure according to the present invention and of conventional resilient structures. In Fig. 1, a curve indicated by "PRESENT INVENTION A" is of a sample of the three dimensional carbon fiber structure of the present invention having a thickness of 40 mm and a bulk density of 30 Kg/m$^3$, and a curve indicated by "URETHANE" is of a sample of a conventional urethane foam structure having a thickness of 20 mm and a bulk density of 40 Kg/m$^3$. In Fig. 2, a curve indicated by "PRESENT INVENTION B" is of a sample of the three dimensional carbon fiber structure of the present invention having a thickness of 30 mm and a bulk density of 24 Kg/m$^3$, and a curve indicated by "POLYESTER" is of a sample of a conventional three dimensional polyester structure prepared by thermally bonding two types of polyester fibers having different melting points, and having a thickness of 35 mm and a bulk density of 34 Kg/m$^3$. In Figs. 1 and 2, arrows rising to the right indicate that the compression load was gradually increased, and arrows falling to the left indicate that the compression load was gradually decreased. The measurement was performed under the conditions with a load area of 2 cm$^2$ and a maximum load of 100 gf/cm$^2$. Fig. 1 shows three measurement results for each sample.

In Figs. 1 and 2, the relationships between the compression load and the compression deformation of the samples A and B of the structure of the present invention are expressed as gentle curves, which indicate that changes in the sinking amount (or compression amount) and the resilience stress with the varying load are continuous and moderate. Therefore, a sleeping pad, a mattress, a chair or the like fabricated from the structure of the present invention exhibits a moderate and stable resilient stress, which ensures comfortable seating and bedding. Conversely, the relationship between the compression load and the compression deformation of the sample of the urethane foam structure is generally linear and steep. This indicates that the structure is highly resistant to initial compression and final compression (with a relatively small load), so that the amount of the compression deformation is extremely small. In the course of the compression (with a relatively large load), the amount of the compression deformation is suddenly (and intermittently) changed. Therefore, a sleeping pad, a chair or the like fabricated from the structure having such compression characteristics gives a stiff tactile feeling, resulting in uncomfortable seating.

Referring to Table 1, this is also apparent from a comparison of the 65%/25% compression stress ratio between the samples A and B of the structure of present invention and the urethane foam structure. More specifically, the 65%/25% compression stress ratios of the samples A and B of the structure of the present invention (13.6 and 11.7, respectively) are notably larger than that of the urethane foam structure (2.5). This indicates that the structure of the present invention has a stable resilient property.

On the other hand, as apparent from a comparison between the samples A and B of the structure of the present invention and the three dimensional polyester fiber structure, the samples A and B of the structure of the present invention each have a smaller bulk density than the three dimensional polyester structure, but are comparable in the compression recovery rate RC and superior in the 65%/25% compression stress ratio to the three dimensional polyester structure (the 65%/25% compression stress ratios thereof are 13.6, 11.7 and 8.4, respectively). Further, the samples A and B of the structure of the present invention have 80,000-time compression residual strain rates of 1.3 and 0.9, respectively, and are superior to the three dimensional polyester structure which has a 80,000-time compression residual strain rate of 9. This indicates that the three dimensional network structure of the present invention is tougher than the three dimensional polyester structure. It is considered that such an excellent resilient property of the structure of the present invention reflects the flexure resilience of the carbon fibers and the firm three dimensional network structure.

Table 1

| | Type of structure | | | |
|---|---|---|---|---|
| | Present Invention A | Urethane | Present Invention B | Polyester |
| Thickness (mm) | 40 | 20 | 30 | 35 |
| Bulk Density (Kg/m$^3$) | 30 | 40 | 24 | 46 |
| Compression Hardness LC | 0.76 | approx.1 | 0.71 | 0.82 |
| Compression Recovery Rate RC | 67 | 60 | 67 | 67 |
| 65%/25% Compression Stress Ratio | 13.6 | 2.5 | 11.7 | 8.4 |
| 80,000-time Compression Residual Strain Rate % | 1.3 | 20 | 0.9 | 9 |

Next, an explanation will be given to a method for producing the structure according to the present invention.

The structure of the present invention can be produced in the following manner. While a solution of a thermosetting resin is sprayed onto opposite surfaces of a fleecy fiber sheet as an aggregate of fibers, 50 wt% of which are carbon fibers and 50 to 100 wt% of which are crimped, the sheet is lapped along the length thereof to form a plurality of sheet layers overlapped one on another. Then, the thermosetting resin is thermally set to bond the fibers at contacts thereof. Thus, the three dimensional carbon fiber network structure is produced. Thermally bondable fibers may be blended in the fiber aggregate. If the thermally bondable fibers are blended in the fiber aggregate, the laminate of the fiber aggregate is heated up to a temperature higher than the melting point of the thermally bondable fibers, so that the thermally bondable fibers can be bonded to the carbon fibers and the like entangled therewith. Therefore, the use of the thermosetting resin and the thermally bondable fibers in combination ensures formation of a firmer three dimensional network.

In the aforesaid method, the fleecy fiber sheet as the fiber aggregate can be prepared by opening fibers including crimped carbon fibers by opening means such as an opening machine and carding the fibers into a web by carding means such as a card. The fiber orientation of the web is not particularly limited. If the preparation of the web is not achieved by using the card but, instead, by blowing the fibers by a air stream and accumulating the fibers on a rotary perforate cylinder, for example, the fiber orientation of the resulting web is random. Such a random web may also be used.

The number of times of lapping the fleecy fiber sheet (or the number of the sheet layers) is two or greater, which is properly determined in consideration of the application of the structure. If the bulk density of the structure is to be increased to enhance the compression resilience and heat retaining property, for example, the number of the sheet layers may be increased. The thickness of the fleecy fiber sheet as the fiber aggregate is not particularly limited, but may properly be determined to afford a three dimensional structure having desired property values in consideration of the production efficiency.

The thickness of the sheet is generally determined in consideration of the number of sheet lapping times, the thickness of the three dimensional structure to be prepared, the production efficiency and the like. To obtain a structure having a high bulk density, an enhanced compression resilience and an excellent heat retaining property, it is preferred to lap a thinner sheet a greater number of times. As the number of sheet lapping times increases, the thermosetting resin solution can more readily and uniformly be spread throughout the fibers, making it possible to bond the fiber contacts firmly and uniformly.

However, it is not always preferred that all the fiber contacts are firmly bonded to each other in the structure.

This is because the requirements for the compression resilience and other properties vary depending on the application of the structure and a certain application may require a three dimensional structure having unbonded fiber contacts. More specifically, the number of unbonded fiber contacts can be increased by using the binder in a smaller amount or by nonuniformly spraying the binder. When an external load is applied to the three dimensional structure having unbonded fiber contacts, fibers with the unbonded contacts are slid relative to each other to absorb the load. Therefore, the structure exhibits a moderate initial compression property. There exists a specific application requiring such compression property. If the structure has too many unbonded contacts, the fibers are liable to migrate within the structure in use thereby to be unevenly distributed therein. Therefore, it is preferred to properly determine the proportion of the unbonded fiber contacts to the bonded fiber contacts.

The fiber aggregate may comprise the crimped carbon fibers alone or in combination with other kinds of fibers (crimped non-carbon fibers, uncrimped carbon fibers or uncrimped non-carbon fibers). Any of various nonflammable and incombustible fibers can be used as the other kinds of fibers. Examples thereof include inorganic fibers (glass fibers; ceramic fibers such as aluminum silicate fibers, alumina fibers and silicon carbide fibers; mineral fibers such as asbestos and rock wool; metallic fibers such as stainless fibers; uncrimped carbon fibers composed of the similar material used in the aforesaid carbon fibers; and the like), and organic fibers (polymeric fibers including rayon fibers such as of viscose rayon and cuprammonium rayon; acetate fibers; thermosetting resin fibers (e.g., phenol resin fibers such as novoloid fibers); nylon fibers; incombustible polyester fibers; aromatic polyamide fibers (e.g., aramid fibers)). Two or more kinds of fibers selected from these fibers may be used in combination.

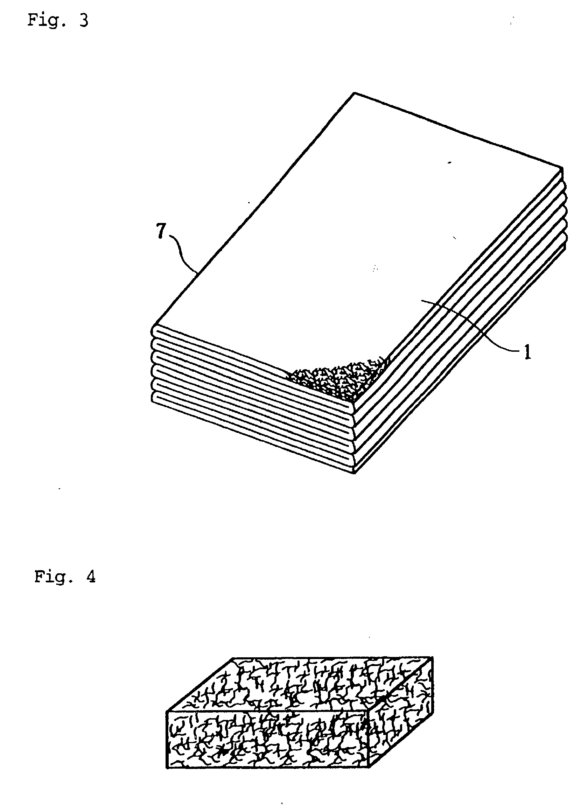

The method of producing the structure according to the present invention will be described more specifically with reference to Figs. 3 to 6.

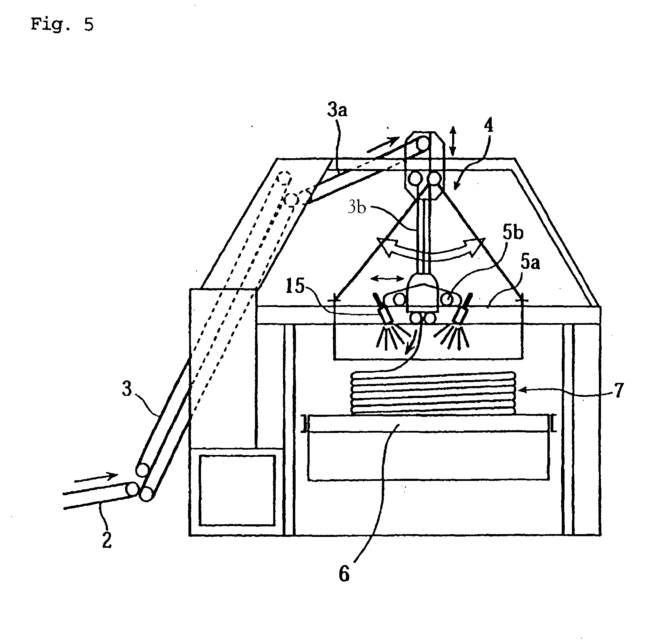

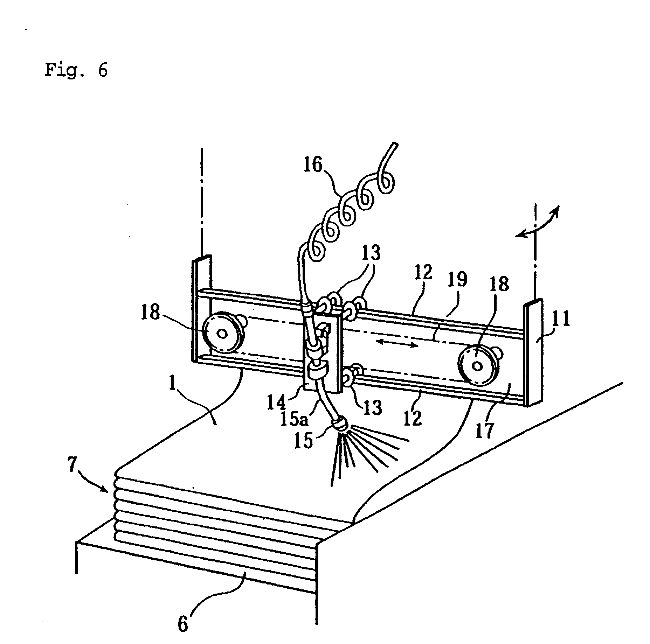

Figs. 5 and 6 show an exemplary apparatus for producing the three dimensional carbon fiber structure according to the present invention. Fig. 5 is a schematic perspective view (side view) for explaining a fiber sheet lapping mechanism, and Fig. 6 is a schematic perspective view (front view) for explaining a binder spraying mechanism.

A fiber sheet 1 drawn out of carding means such as a card is continuously conveyed by a conveyer 2 and a pair of belts 3, and introduced into a vertical cloth lapper 4 from an upper end of a belt 3a. In the cloth lapper 4, the fiber sheet 1 is held between a pair of belts 3b and conveyed from an upper end to a lower end thereof. The fiber sheet 1 is supplied from the lower end of the cloth lapper 4 onto an elevatable bench or a forwardly movable conveyer 6, while being swung in a direction of the thickness thereof by a pivotal swing mechanism. The fiber sheet 1 is lapped into a plurality of layers on the conveyer 6 to form a laminate 7.

The swing mechanism includes a rail 5a extending along the thickness of the fiber sheet 1, and rollers 5b adapted to laterally travel on the rail. Without any special consideration, the distance between the belt 3a and'the rail 5a would be changed as the rollers 5b travel along the rail, thereby exerting an external force to the fiber sheet 1. For this reason, the inclination angle of the belt 3a provided above the swing mechanism is changed as the rollers 5b travel along the rail to keep the distance constant. Thus, the exertion of the external force to the fiber sheet 1 is suppressed.

Spraying mechanisms adapted to reciprocate transversely of the fiber sheet 1 on opposite sides of the fiber sheet 1 are attached to the lower end of the swing mechanism. Thus, the binder can be sprayed onto the fiber sheet 1, while the sheet is folded along a line perpendicular to the length of the sheet.

As shown in Figs. 5 and 6, the spraying mechanisms each include retention plates 11 provided on opposite sides thereof outwardly of the edges of the fiber sheet 1 below the swing mechanism, a pair of rails 12 extending generally parallel to each other between the retention plates 11, pulleys 13 movable along the respective rails 12, a mounting plate 14 to which the pulleys 13 are attached, a hollow arm 15a attached to the mounting plate 14, and a nozzle 15 attached to a tip of the arm 15a. To prevent the pulleys 13 from disengaging from the arm 15a while ensuring smooth movement of the mounting plate 14, two pulleys 13 are mounted on each of the rails 12 and formed with an annular groove having a width compatible with the width of the rail 12. The arm 15a is connected to a flexible tube or hose 16 for supplying a solution of a binder such as a thermosetting resin. The tip of the arm 15a is bent or curved to be directed to a surface of the fiber sheet 1. The nozzle 15 has a rotatable hinge mechanism so that the spraying angle is variable.

A pair of gears 18 are rotatably attached to opposite side portions of a plate 17 provided between the retention plates 11, and a chain 19 is stretched between the gears 18. One of the gears 18 is rotatively driven via a belt stretched between pulleys by a motor.

For reciprocal movement of the nozzle 15, the mounting board 14 is connected to the chain 19, and stoppers for limiting the movement of the pulleys 13 and detecting the reaching of the pulleys are provided in positions on the plate 17 or the retention plates 11 corresponding to the edges of the fiber sheet 1. Detection signals from the stoppers are used as a reversion signal for reversing the rotation of the motor.

With the use of the apparatus having the aforesaid operative mechanisms, a carbon fiber laminate according to the present invention can be produced at a high productivity. The laminate (the fiber sheet repeatedly folded along a line perpendicular to the length thereof and bonded together) is shown in Fig. 3. The edges of the laminate are cut off for formation of the three dimensional carbon fiber structure according to the present invention. Fig. 4 is a schematic diagram illustrating the orientation of the fibers in the structure according to the present invention. The structure of the present invention produced by means of the aforesaid apparatus has a firm three dimensional network in which the carbon fibers are bonded to each other at contacts thereof.

In the production method employing the aforesaid apparatus, the three dimensional carbon fiber structure which has a bulk density of 20 to 80 Kg/m$^3$ and a compression hardness LC of 0.7 to 0.9 with application of the maximum load of 100 gf/cm$^2$ can readily be obtained by properly selecting the type of the crimped fibers, the crimp rate, the crimp number, the composition of the fleecy sheet, the thickness of the laminate (or the number of the sheet layers) and the amount of the binder to be added and, as required, by pressing the laminate for thermal bonding thereof. That is, the three dimensional structure can be produced as having properties suitable for its application by variably controlling the production conditions within ranges specified by the present invention.

For example, where the fleecy fiber sheet is formed of crimped carbon fibers alone which has a crimp rate of 20%, a crimp number of 2 crimps/cm and a fiber length of 75 mm by using phenol resin in an amount of 10 to 25 wt% relative to the fleecy fiber sheet, the resulting structure has a bulk density of 20 to 40 Kg/m$^3$, a compression hardness LC of 0.7 to 0.8 with application of the maximum load of 100 gf/cm$^2$, a compression recovery rate RC of 65% or greater, a 65%/25% compression stress ratio of 10 or greater, and a 80,000-time compression residual strain rate of less than 5%. The structure with such property values has a moderate compression property (resilience) and therefore is suitable for a sleeping pad material and a cushioning material.

Where the phenol resin is used in an amount of 25 to 40 wt% relative to the fleecy fiber sheet, the resulting structure has a bulk density of 40 to 80 Kg/m$^3$, a compression hardness LC of about 0.8 to 0.9 with application of the maximum load of 100 gf/cm$^2$. This structure has a greater compression resilience than the aforesaid structure. Therefore, the structure has a high utility value for a cushioning floor material (including carpet) and a vibration-isolating and acoustic-insulating floor material.

## BRIEF DESCRIPTION OF THE DRAWINGS

Fig. 1 is a graph illustrating relationships between the load and the compression deformation of a three dimensional carbon fiber structure according to the present invention and of an urethane structure;

Fig. 2 is a graph illustrating relationships between the load and the compression deformation of the three dimensional carbon fiber structure according to the present invention and of a polyester structure;

Fig. 3 is a schematic perspective view of a laminate prepared in accordance with a method of the present invention;

Fig. 4 is a schematic diagram illustrating the orientation of fibers in the three dimensional carbon fiber structure of the present invention;

Fig. 5 is a schematic diagram (side view) of an apparatus for explaining a lapping mechanism thereof; and

Fig. 6 is a schematic diagram (front view) of the apparatus for explaining a spraying mechanism thereof.

## THE BEST MODE FOR CARRYING OUT THE PRESENT INVENTION

The present invention will hereinafter be described by way of embodiments thereof.

EXAMPLE 1

Crimped bulky pitch carbon fibers spun by a vortex spinning method (DOMACARBO) available from Donak Co., Ltd. and having an average fiber diameter of 13 μm and an average fiber length of 75 mm) were supplied to an opening machine and then to a metallic carding machine (60-MDK available from Ikegami Machinery Co., Ltd.) to prepare a fleecy fiber sheet having an average thickness of 7 mm. The fiber sheet had a bulk density of 5.7 Kg/m$^3$. By means of a spraying formation machine (vertical cloth lapper available from Iwamoto Works Co., Ltd.), the fiber sheet was lapped into a 30-layer laminate having a width of 1.2 m, while a small amount of a phenol resin solution was sprayed on opposite surfaces of the fiber sheet. Used as the phenol resin solution was a solution containing 40 parts by weight of a water-soluble phenol resin (SUMILIGHT RESIN available from Sumitomo Durez Co.) dissolved in 60 parts by weight of water.

In turn, the laminate was held between thickness adjusting plates spaced by 40 mm in a thermosetting oven of hot air circulation type, and heated at 230°C for about 30 minutes for thermally setting the resin, and then the edges of the laminate were cut off. Thus, a three dimensional carbon fiber structure according to the present invention was produced. The content of the phenol resin in the fleecy fiber sheet was 15 wt% relative to the fiber sheet.

As the result of determination of the properties of the structure, the structure had a thickness of 40 mm, a bulk density of 30 Kg/m$^3$, a compression hardness LC of 0.76 with application of the maximum load of 100 gf/cm$^2$, a

compression recovery rate RC of 67%, a 65%/25% compression stress ratio of 13.6, and a 80,000-time compression residual strain rate of 1.3%. A graph of the compression load versus the compression deformation of the structure is shown in Fig. 1 (PRESENT INVENTION A). On the basis of the graph of the compression load versus the compression deformation, it was confirmed that the structure had compression properties suitable for a sleeping pad material and a cushioning material.

EXAMPLE 2

A three dimensional carbon fiber structure according to the present invention was produced in substantially the same manner as in EXAMPLE 1, except that pitch carbon fibers having an average fiber diameter of 18 μm and an average fiber length of 75 mm was used, that the average thickness of the fleecy fiber sheet was 9 mm, that the phenol resin solution was sprayed in a greater amount, and that the thermal setting was achieved by applying a pressure from opposite sides of the thickness adjusting plates spaced by 20 mm.
As the result of the determination of the properties of the structure, the structure had a thickness of 20 mm, a bulk density of 80 Kg/m$^3$, a compression hardness LC of 0.88 with application of the maximum load of 100 gf/cm$^2$, a compression recovery rate RC of 69%, 65%/25% compression stress ratio of 19.0, and a 80,000-time compression residual strain rate of 0.8%. The bulk density, compression hardness and 65%/25% compression stress ratio of the structure are greater than the structure of EXAMPLE 1 and, therefore, the structure is useful as a vibration-isolating floor material.

EXAMPLE 3

A fleecy fiber sheet having an average thickness of 6 mm and a density of 6.7 Kg/m$^3$ was prepared by using 70 parts by weight of pitch carbon fibers having an average fiber diameter of 13 μm and an average fiber length of 75 mm and 30 parts by weight of thermally bondable polyester fibers (MELTY available from Unitika Ltd. and having a denier of 4 and an average fiber length of 38 mm). The fleecy fiber sheet was lapped into a 30-layer laminate, while a solution containing 20 parts by weight of a thermosetting resin available under the trade name of RESITOP from Gunei Chemical Co., Ltd. and 80 parts by weight of water was sprayed onto the fiber sheet. Then, the laminate was held between thickness adjusting plates spaced by 40 cm, and heated at 230°C for 30 minutes.
The three dimensional structure thus produced in accordance with the present invention had a thickness of 40 mm, a bulk density of 30 Kg/m$^3$, a compression hardness LC of 0.73 with application of the maximum load of 100 gf/cm$^2$, a compression recovery rate RC of 67, a 65%/25% compression stress ratio of 12.9, and a 80,000-time compression residual strain rate of 2.5%. The structure is useful as a sleeping pad material and a cushioning material as in EXAMPLE 1.

**INDUSTRIAL APPLICABILITY**

As previously described, the three dimensional carbon fiber structure according to the present invention has an excellent properties, e.g., toughness, heat-resistance, chemical stability, non-flammability and non-toxicity, which are intrinsic in carbon fibers, and has a firm three dimensional network. Therefore, the three dimensional carbon fiber structure provides a fire-safeguard and a moderate resilience, compression resilience, compression durability and air permeability which give comfort to human and cannot be afforded by a simple aggregate of carbon fibers.
Therefore, the present invention provides a novel material which has properties unavailable in the prior art, and can widely be used in application fields closely associated with human sensibilities, thereby drastically expanding the application fields of the carbon fibers. Thus, the present invention has great industrial significance.

**Claims**

1.  A three dimensional carbon fiber structure comprising an aggregate of fibers, not less than 50 wt% of which are carbon fibers and 50 to 100 wt% of which are crimped; and a binder essentially consisting of either or both of a thermosetting resin and thermally bondable fibers, the aggregated fibers being bonded to each other at contacts thereof with the binder to form a three dimensional network **characterized in that** the three dimensional carbon fiber structure having a bulk density of 24 to 80 Kg/m$^3$ and a compression hardness LC of 0.7 to 0.9 with application of a maximum load of 100 gf/cm$^2$.

2.  A three dimensional carbon fiber structure as set forth in claim 1, which has a bulk density of 24 to 40 Kg/m$^3$, a compression hardness LC of 0.7 to 0.8 with application of a maximum load of 100 gf/cm$^2$, a compression recovery

rate RC of not less than 65%, a ratio of 65% compression stress to 25% compression stress of not less than 10, and a residual strain rate of less than 5% after 80,000-time compression.

3. A three dimensional carbon fiber structure as set forth in claim 1 or 2, wherein the binder contains the thermosetting resin in an amount of not less than 50 wt%, and the binder is contained in the structure in an amount of 10 to 40 wt% relative to the total amount of the fibers.

4. A three dimensional carbon fiber structure as set forth in claim 1, 2 or 3, wherein the crimped fibers each have a length of 0.1 to 10 cm.

5. A three dimensional carbon fiber structure as set forth in claim 1, 2, 3 or 4, wherein the crimped fibers comprise carbon fibers.

6. A three dimensional carbon fiber structure as set froth in claim 1, 2, 3, 4 or 5, wherein the carbon fibers comprise pitch-based carbon fibers.


**Patentansprüche**

1. Dreidimensionale Kohlenstofffaserstruktur, umfassend eine Anhäufung von Fasern, von welchen nicht weniger als 50 Gew.-% Kohlenstofffasern sind und von welchen 50 bis 100 Gew.-% gekräuselt sind, und ein Bindemittel, welches im Wesentlichen aus einem wärmehärtbaren Harz oder wärmebindbaren Fasern oder beidem besteht, wobei die angehäuften Fasern an Kontaktstellen davon mit dem Bindemittel aneinander gebunden sind, um ein dreidimensionales Netzwerk zu bilden, **dadurch gekennzeichnet, dass** die dreidimensionale Kohlenstofffaserstruktur eine Rohdichte von 24 bis 80 kg/m$^3$ und eine Druckfestigkeit LC von 0,7 bis 0,9 bei Anlegen einer Höchstlast von 100 gf/cm$^2$ aufweist.

2. Dreidimensionale Kohlenstofffaserstruktur nach Anspruch 1, welche eine Rohdichte von 24 bis 40 kg/m$^3$, eine Druckfestigkeit LC von 0,7 bis 0,8 bei Anlegen einer Höchstlast von 100 gf/m$^2$, eine Druckerholungsrate RC von nicht weniger als 65 %, ein Verhältnis von 65 % Druckspannung zu 25 % Druckspannung von nicht weniger als 10 und eine Restdehnungsrate von weniger als 5 % nach 80.000-maligem Zusammendrücken aufweist.

3. Dreidimensionale Kohlenstofffaserstruktur nach Anspruch 1 oder 2, wobei das Bindemittel das wärmehärtbare Harz in einer Menge von nicht weniger als 50 Gew.-% enthält und das Bindemittel in der Struktur in einer Menge von 10 bis 40 Gew.-% in Bezug auf die Gesamtmenge der Fasern enthalten ist.

4. Dreidimensionale Kohlenstofffaserstruktur nach Anspruch 1, 2 oder 3, wobei die gekräuselten Fasern jeweils eine Länge von 0,1 bis 10 cm aufweisen.

5. Dreidimensionale Kohlenstofffaserstruktur nach Anspruch 1, 2, 3, oder 4, wobei die gekräuselten Fasern Kohlenstofffasern umfassen.

6. Dreidimensionale Kohlenstofffaserstruktur nach Anspruch 1, 2, 3, 4 oder 5, wobei die Kohlenstofffasern pechbasierte Kohlenstofffasern umfassen.


**Revendications**

1. Structure tridimensionnelle de fibre de carbone comprenant un agrégat de fibres, dont au moins 50 % en poids sont des fibres de carbone et dont 50 à 100 % en poids sont crêpées, et un liant essentiellement constitué de l'un ou l'autre ou des deux parmi une résine thermodurcissable et des fibres thermoliables, les fibres agrégées étant liées les unes aux autres au niveau de points de contact de celles-ci avec le liant pour former un réseau tridimensionnel, **caractérisée en ce que** la structure tridimensionnelle de fibre de carbone a une densité apparente comprise entre 24 et 80 Kg / m$^3$ et une dureté de compression LC comprise entre 0,7 et 0,9 avec application d'une charge maximum de 100 gf / cm$^2$.

2. Structure tridimensionnelle de fibre de carbone selon la revendication 1, ayant une densité apparente comprise entre 24 et 40 Kg / m$^3$, une dureté de compression LC comprise entre 0,7 et 0,8 avec application d'une charge maximum de 100 gf / cm$^2$, un taux de récupération de compression RC supérieur ou égal à 65 %, un rapport de la contrainte de compression à 65 % sur la contrainte de compression à 25 % supérieur ou égal à 10 et une vitesse de déformation résiduelle inférieure à 5 % après 80 000 compressions.

3. Structure tridimensionnelle de fibre de carbone selon la revendication 1 ou 2, dans laquelle le liant contient la résine thermodurcissable en une quantité supérieure ou égale à 50 % en poids et le liant est contenu dans la structure en une quantité allant de 10 à 40 % en poids par rapport à la quantité totale de fibres.

4. Structure tridimensionnelle de fibre de carbone selon la revendication 1, 2 ou 3, dans laquelle les fibres crêpées ont chacune une longueur comprise entre 0,1 et 10 cm.

5. Structure tridimensionnelle de fibre de carbone selon la revendication 1, 2, 3 ou 4, dans laquelle les fibres crêpées comprennent des fibres de carbone.

6. Structure tridimensionnelle de fibre de carbone selon la revendication 1, 2, 3, 4 ou 5, dans laquelle les fibres de carbone comprennent des fibres de carbone à base de brai.

Fig. 1

Fig. 2

POLYESTER

PRESENT INVENTION B

load (gf/cm$^2$)

compression deformation (mm)

Fig. 3

Fig. 4

Fig. 5

Fig. 6